# EUROPÄISCHE PATENTSCHRIFT

(11) **EP 2 840 932 B1**
(45) Veröffentlichungstag und Bekanntmachung des Hinweises auf die Patenterteilung: **10.08.2016**
(21) Anmeldenummer: 13715949.7
(22) Anmeldetag: 05.04.2013
(51) Int. Cl.: A47J 45/02, A47J 47/16, B25H 1/12, A47B 17/03, A47B 77/02, A47B 96/18

(54) **ARBEITSPLATTE MIT AUSFAHRBARER HALTEVORRICHTUNG**
WORK TOP WITH EXTENSIBLE RETAINING MEANS
PLAN DE TRAVAIL ÉQUIPÉ D'UN DISPOSITIF PORTEUR ESCAMOTABLE

(30) Priorität: 27.04.2012 DE 202012004306 U
(43) Veröffentlichungstag der Anmeldung: 04.03.2015
(73) Patentinhaber: Schreiter, Johannes, 63069 Offenbach (DE)
(72) Erfinder: Schreiter, Johannes, 63069 Offenbach (DE)
(74) Vertreter: Meyer-Dulheuer, Karl-Hermann
(86) Internationale Anmeldenummer: PCT/EP2013/057217
(87) Internationale Veröffentlichungsnummer: WO 2013/160086

(56) Entgegenhaltungen:
- DE-A1- 2 856 168
- JP-A- 2000 037 251
- US-A- 1 708 424
- US-A- 3 317 260
- US-A- 3 701 576
- US-A- 4 363 587

## Beschreibung

Bei der vorliegenden Erfindung handelt es sich um eine Arbeitsplatte mit ausfahrbaren Haltevorrichtungen. Befinden sich diese Haltevorrichtungen im ausgezogenen Zustand, so lassen sich Behälter einhängen, die beispielsweise zur Aufnahme von Abfällen dienen können. Die ausfahrbaren Haltevorrichtungen ermöglichen eine platzsparende und einfache Anbringung der Behälter. Eine Anbringung der Haltevorrichtung an mehreren Seiten der Arbeitsplatte ist auch möglich. Weiterhin können mehrere Haltevorrichtungen in Kombination miteinander einen oder mehrere Behälter aufnehmen.

Der Stand der Technik kennt Arbeitsplatten, welche dem Benutzer der Arbeitsfläche Aufbewahrungsplatz zugänglich machen. So ist aus der DE 10 2006 059484 B4 ein Schneidbrett bekannt, das über eine Schublade verfügt, welche im kastenförmigen Trägerteil des Schneidbretts integriert ist. Durch diesen Aufbau ist es möglich, Küchenabfälle schnell in die Schublade zu überführen. Jedoch ist aufgrund der Bauform das Volumen der Schublade begrenzt, sie ist folglich nur für Kleinmengen geeignet. Ein Wechsel der Schublade ist zwar möglich, hierbei muss diese aber vollständig aus dem Schneidbrett herausgezogen werden. Falls die Schublade stark befüllt ist, könnte sich dies schwierig gestalten, da der Inhalt in Kontakt mit der Unterseite des Schneidbretts treten könnte und beim Herausziehen zunächst nur seitlich Kraft auf die Schublade ausgeübt werden kann. Außerdem ist es bei dieser Erfindung unvorteilhaft, dass die Schublade in direktem Kontakt mit der Arbeitsplatte steht. Der Inhalt der Schublade gerät deshalb leicht an die Arbeitsplatte sowie möglicherweise auch die Führung der Schublade, was zu einer Verschmutzung der Vorrichtung führen kann.

Die DE 20 2006 009121 U1 offenbart eine Arbeitsplatte, an welcher sich seitlich Behälter anbringen lassen. Diese Behälter werden mittels eines Führungsmechanismus oder eines magnetischen Mechanismus an die Arbeitsplatte angebracht. Beide Möglichkeiten sind durch Vorteile und Nachteile gekennzeichnet.

Die Anbringung der Behälter mittels eines magnetischen Mechanismus erlaubt ein leichtes Ein- und Aushängen der Behälter, jedoch darf der Inhalt der Behälter nicht zu schwer sein, da sich die Behälter ansonsten nicht halten lassen. Die Anbringung der Behälter mittels einer Schiene erlaubt es auch, Behälter mit einem erheblichen Gewicht zu halten, jedoch ist die Anbringung über eine Führungsschiene beim Austausch der Behälter sehr unpraktisch. Bei dieser Erfindung müssen außerdem die Behälter stets mit einem speziellen Verbindungsmechanismus (Magnet, Schieneneinsatz) ausgestattet sein.

Aus dem Stand der Technik sind Einhängevorrichtungen bekannt, die über einen ausfahrbaren Rahmen verfügen. Die DE 1731128 U beschreibt einen ausfahrbaren Rahmen mit einer Tragschiene für Schriftgutträger. Hierbei handelt es sich um einen Einbau für Schreibtische, den man aus dem Schreibtisch herausziehen kann, und der dazu dient, Akten oder sonstiges Schriftgut aufzuhängen. Zum Aufhängen von Behältern ist dieser Rahmen aufgrund seiner Ausrichtung allerdings nicht geeignet, und seine Verbauung ist keineswegs platzsparend ausgeführt.

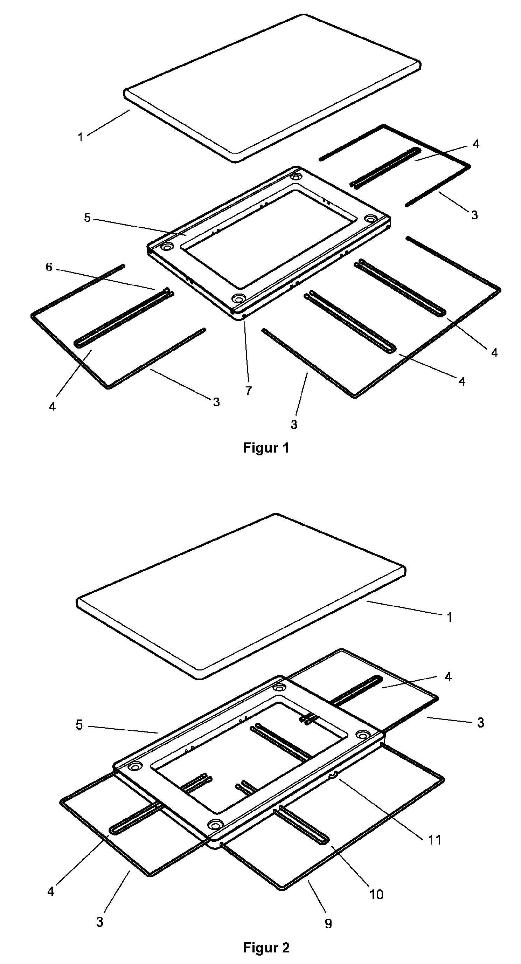

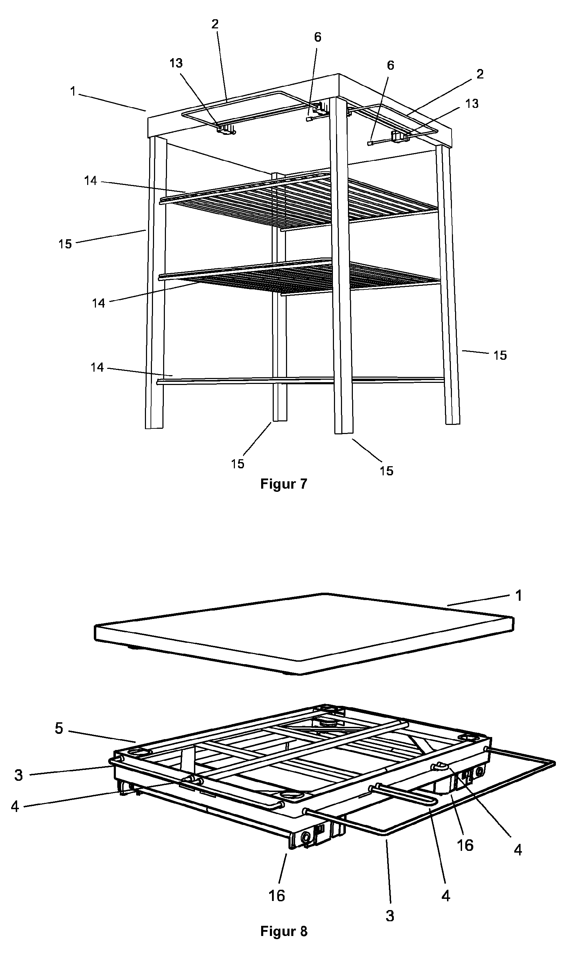

Weiterhin ist aus der US 1708424 A ein Herd mit einem ausfahrbaren Rahmen bekannt. In den ausgezogenen Rahmen lassen sich Behälter einhängen. Hier kommt jedoch nur ein Rahmen auf einer Seite des Herds zum Einsatz, nicht aber auf mehreren Seiten. Weiterhin wird hier nur ein Rahmen verwendet, um einen Behälter aufzuhängen. Unter Umständen kann ein zu stark befüllter Behälter nicht ausreichend gestützt werden. Deshalb wird hier zusätzlich eine Schrägstrebe (33) zur Stützung benötigt, siehe Fig. 7. In Fig. 2 ist zu ersehen, dass der Rahmen für einzuhängende Behälter an allen vier Seiten geeignete Ablageflächen zur Verfügung stellt. Dies gewährleistet zwar eine größere Stabilität, legt den Rahmen jedoch auf genau eine Behältergröße fest.

Die deutsche Offenlegungsschrift DE 2856168 A1 offenbart einen Badewannenwickelaufsatz. Gemäß dieser lässt sich eine Badewanne in einer Einhängevorrichtung neben einer Wickelplatte einhängen. Die Einhängevorrichtung für die Badewanne ist hierbei ein- und ausfahrbar ausgestaltet. Auch hier ist der Rahmen auf eine feste Behältergröße festgelegt.

Das Konzept eines Tisches mit einem ausfahrbaren Bestandteil wird im US-Patent US 4,363,587 A gezeigt. Eine ähnliche ausfahrbare Lösung für einen Tisch findet sich in der japanischen Offenlegungsschrift JP 2000-37251 A. Die US-Anmeldung US 3,317,260 A offenbart eine Schublade mit eingebautem Schiebefach. Eine Arbeitsplatte mit darunter angebrachter Schublade wird in US-Patent 3,701,576 A beschrieben.

Aufgabe der vorliegenden Erfindung ist es, eine Arbeitsplatte bereitzustellen, die dazu in der Lage ist, Behälter auf mindestens einer Seite der Arbeitsplatte zu halten, wobei ein einfacher Austausch der Behälter möglich sein soll und die Aufhängevorrichtungen keinen Platz einnehmen sollen, wenn sie nicht in Gebrauch sind. Die Aufhängung soll möglich sein, ohne dass der Behälter mit zusätzlichen Aufhängevorrichtungen ausgestattet sein muss. Weiterhin sollen ein flexibles Aufhängen von Behältern unterschiedlicher Größen und wahlweise einem oder mehreren Behältern auf einer Seite möglich sein. Auch die Aufhängung von schweren Behältern soll an der Arbeitsplatte möglich sein.

Die Aufgabe wird gelöst durch die Arbeitsplatte nach Anspruch 1, dadurch gekennzeichnet, dass sie mindestens eine ausfahrbare Haltevorrichtung aufweist, die aus einem äußeren und mindestens einem inneren ausfahrbaren u-förmigen Bügel (3, 4) besteht. Gemäß Anspruch 1 kann die Haltevorrichtung auf unterschiedliche Weise in der Arbeitsplatte verbaut sein. Maßgeblich dabei ist, dass sich beide Bügelenden auf gleicher Höhe befinden. Entweder werden die beiden Bügelenden in einem 90°-Winkel seitlich in die Arbeitsplatte eingeführt, oder sie werden durch Bügelhalterungen hindurchgeführt, die unterhalb der Arbeitsplatte angebracht sind, wobei die Bügelenden und die Arbeitsplatte zueinander einen 90°-Winkel bilden, oder sie werden in einem 90°-Winkel in einen Halterahmen eingeführt, der an der Unterseite der Arbeitsplatte entweder fest oder auswechselbar angebracht ist.

Als u-förmig sollen nicht nur Formen aufgefasst werden, bei denen die Verbindungslinie zwischen linkem und rechtem Buchstabenteil bogenförmig nach außen gewölbt ist, sondern auch solche, bei denen die Verbindungslinie als Gerade ausgeprägt ist oder bei denen die Verbindungslinie als Gerade ausgeprägt ist, die zu linkem und rechtem Buchstabenteil jeweils eine abgerundete Ecke aufweist. In jedem der vorangegangenen Fälle soll der 90°-Winkel in der Ebene der Arbeitsfläche liegen. Die Ausführungsformen weisen unterschiedliche Vorteile auf. So ist die Durchführung des Bügels durch die Arbeitsplatte besonders einfach und erlaubt eine hohe Anbringung der Bügel. Die Anbringung der Bügel mittels Bügelhalterungen kann ästhetisch von Vorteil sein, weil keine Löcherbohrung vonnöten ist und die Bügel bei einer entsprechenden Verbauung im eingezogenen Zustand nicht sichtbar sind. Der Halterahmen bietet den Vorteil einer Anbringung ohne Verwendung von Bügelhalterungen und ohne dass in die Arbeitsplatte Löcher gebohrt werden müssen. Ein auswechselbarer Halterahmen gestattet es, im Falle einer verschmutzten oder abgenutzten Arbeitsfläche bloß die Arbeitsfläche auszutauschen, während Halterahmen samt Haltevorrichtung erhalten bleiben können. Außerdem können die Haltevorrichtungen in ausfahrbare Schubladen eingebracht sein, die sich unter der Arbeitsplatte befinden.

Wird die Haltevorrichtung ausgefahren, so lassen sich Behälter in sie einhängen. Geeignete Behälter besitzen einen oben auskragenden Rand, der sich auf dem Bügel einhängen lässt. Abhängig von der Ausziehlänge des Bügels ergeben sich Einhängemöglichkeiten unterschiedlicher Ausmaße. So lassen sich Behälter unterschiedlicher Größe auf einer Haltevorrichtung aufhängen. Besonders vorteilhaft ist hier die Verwendung von Behältern gemäß Gastro-Norm (EU-Norm EN 631). Es ist aber auch die Verwendung anders dimensionierter Behälter möglich.

Eine Arbeitsplatte mit einer Haltevorrichtung für Behälter ist bei vielen Anwendungsfällen vorteilhaft. Ein beispielhafter Anwendungsfall ist hier die Verwendung der Arbeitsfläche in einer Küche. Hier werden auf Arbeitsflächen häufig Schneidearbeiten durchgeführt, wobei geschnittene Nahrungsmittel bzw. beim Schneiden anfallende Abfälle nach Möglichkeit schnell von der Arbeitsfläche entfernt werden sollen. Es ist hier von Vorteil, wenn eine Haltevorrichtung an der Arbeitsfläche befindliche Behälter vorhalten kann, in welche die anfallenden Arbeitsergebnisse direkt überführt werden können. Es ist hierbei einsichtig, dass es besonders vorteilhaft ist, wenn sich die Behälter schnell austauschen lassen, denn so können volle Behälter auf einfache Weise zu anderen Arbeitsplatten zur Weiterverarbeitung verbracht werden, und an der Arbeitsplatte kann direkt ein leerer Behälter eingehängt werden. Durch die in ihren baulichen Ansprüchen sehr reduzierte Ausführung der Haltevorrichtung ist es gewährleistet, dass sie sich auch sehr einfach reinigen lässt. Zu guter Letzt ist die erfindungsgemäße Vorrichtung platzsparend, denn wenn die Behälter nicht benutzt werden, lässt sich die Haltevorrichtung einfahren. Selbstverständlich sind neben der Anwendung einer solchen Arbeitsplatte zum Zweck von Küchenarbeiten auch weitere Anwendungsfälle möglich. So kann es sich bei der Arbeitsplatte auch um eine Arbeitsplatte zum Einsatz an einem Drechslerarbeitsplatz, einem Uhrmacherarbeitsplatz, einem Nagelstudioarbeitsplatz, einem Feinmechanikerarbeitsplatz, einem Elektronikerarbeitsplatz oder einem sonstigen Arbeitsplatz handeln, bei dem es erwünscht ist, die Arbeitsplatte von Arbeitsergebnissen und/oder Abfällen freizuhalten.

In einer besonders vorteilhaften Ausführungsform werden mehrere Haltevorrichtungen in Kombination miteinander eingesetzt. So kann eine äußere Haltevorrichtung von mehreren inneren Haltevorrichtungen segmentiert werden. Die sich aus der Kombination der Haltevorrichtungen ergebende Einhängemöglichkeit erlaubt es aufgrund ihrer Form, mehrere Behälter einzuhängen. Als Einhängemöglichkeit soll jegliche Möglichkeit zum Einhängen von Behältern definiert sein, die sich durch die Verwendung einer oder mehrerer Haltevorrichtungen ergibt. Auch das Einhängen eines in sich segmentierten Behälters mit mehreren Auflageflächen ist bei der Verwendung von mehreren Haltevorrichtungen in Kombination denkbar. Dies kann dann besonders wichtig sein, wenn ein Behälter ein großes Volumen besitzt und deshalb auch ein großes Maximalgewicht durch die Haltevorrichtungen getragen werden muss. Eine Haltevorrichtung allein weist hierfür unter Umständen nicht die notwendige Stabilität auf. Hier kann der Einsatz mehrerer Haltevorrichtungen in Kombination Abhilfe schaffen. Die in Kombination wirkenden Haltevorrichtungen werden auf derselben Höhe an der Arbeitsfläche angebracht.

In einer weiteren möglichen Ausführungsform sind die in Kombination miteinander wirkenden Haltevorrichtungen unabhängig voneinander bewegbar. Als Beispiel gegeben sei eine äußere Haltevorrichtung, die in Kombination mit einer inneren Haltevorrichtung einsetzbar ist. Je nach Anwendungsfall kann in diesem Fall entweder nur die äußere Haltevorrichtung ausgefahren sein, um das Einhängen eines großen Behälters zu ermöglichen, oder es können äußere und innere Haltevorrichtungen ausgefahren sein, um das Einhängen von zwei kleineren Behältern zu ermöglichen. Es ist weiterhin möglich, beliebige Ausfahrlängen der Haltevorrichtungen miteinander zu kombinieren. Die Einhängemöglichkeiten, die sich durch das Zusammenspiel der Haltevorrichtungen ergeben, können dadurch eine Vielzahl von Formen annehmen.

In einer weiteren möglichen Ausführungsform sind die in Kombination miteinander wirkenden Haltevorrichtungen nicht unabhängig voneinander bewegbar. Als Beispiel gegeben sei eine äußere Haltevorrichtung, die in Kombination mit einer inneren Haltevorrichtung eingesetzt wird. Aufgrund einer Verbindung zwischen äußerer und innerer Haltevorrichtung sind diese Haltevorrichtungen nur zusammen bewegbar. Dies ist dann gewünscht, wenn bekannt ist, dass die Haltevorrichtungen stets nur in Kombination miteinander einzusetzen sind.

Bei der vorliegenden Erfindung ist es möglich, dass an einer Arbeitsplatte mehrere Haltevorrichtungen angebracht werden. Es ist hierbei möglich, dass diese Haltevorrichtungen nicht in Kombination miteinander wirken müssen. So können an einer Arbeitsplatte mehrere Haltevorrichtungen unter- und/oder nebeneinander befestigt sein. Eine erfindungsgemäße Ausführungsform sieht vor, dass Haltevorrichtungen an mehreren Seiten der Arbeitsplatte angebracht werden, sodass auf unterschiedlichen Seiten der Arbeitsplatte Behälter eingehängt werden können. Dadurch wird es ermöglicht, auch bei kleinen Arbeitsplatten ein großes Gesamtvolumen bereitzustellen. Die Anbringung von Haltevorrichtungen auf unterschiedlichen Seiten der Arbeitsplatte erfordert es, dass diese auf unterschiedlicher Höhe angebracht werden, falls sie ansonsten miteinander kollidieren würden.

Beim Gebrauch einer Arbeitsplatte sollen Arbeitsprodukte nicht auf den Boden fallen können. Ein Spalt zwischen Arbeitsplatte und eingehängtem Behälter ist deshalb nicht erwünscht, weil ansonsten bei der schnellen Überführung von Materialien von der Arbeitsplatte in den Behälter ein Teil dieser Materialien in den Spalt fallen könnte. Aus diesem Grund verfügt die Arbeitsplatte in einer möglichen Ausführungsform über eine Aussparung im Bereich der Einhängemöglichkeit. Diese Aussparung ist solchermaßen dimensioniert, dass sich ein eingehängter Behälter im Bereich der Aussparung zum Teil unter der Arbeitsplatte befindet. Hierdurch wird ein ungewünschter Spalt zwischen Arbeitsplatte und Behälter vermieden. platte befindet. Hierdurch wird ein ungewünschter Spalt zwischen Arbeitsplatte und Behälter vermieden.

In einer bevorzugten Ausführungsform ist die Haltevorrichtung dazu in der Lage, bei unterschiedlichen Ausziehlängen fest einzurasten. Dadurch ist es gewährleistet, dass eine zufällige Veränderung der Ausziehlänge unterbleibt. Es können bei der Verwendung mechanische Kräfte auftreten, die die Ausziehlänge beeinflussen. Dies ist nicht erwünscht, denn es soll gewährleistet sein, dass der Behälter nach Möglichkeit bündig an der Arbeitsplatte anliegt. Nur wenn die Haltevorrichtung eine dem Behälter gemäße Ausziehlänge besitzt, ist dies der Fall. Es ist weiterhin bevorzugt, wenn durch bauliche Maßnahmen eine maximale Ausziehlänge festgelegt wird. Dies kann zum Beispiel durch eine Verbreiterung der Bügelenden bewirkt werden.

Die erfindungsgemäße Vorrichtung kann weiterhin mit einer oder mehreren Schubladen ausgestattet sein. Diese sind unterhalb der Arbeitsplatte zu verbauen. Dadurch, dass die Haltevorrichtungen beweglich ausgeführt sind, ist eine Benutzung der Schubladen stets möglich, wenn die Behälter ausgehängt und die Haltevorrichtungen eingefahren sind. Die Schubladen sollten weiterhin in einem hinreichenden vertikalen Abstand von den Haltevorrichtungen angebracht sein, sodass ein Zugang zu den Schubladen auch dann möglich ist, wenn in die Haltevorrichtungen Behälter eingehängt sind.

Erfindungsgemäße Ausführungsformen sind in den Abbildungen wie folgt dargestellt. Figur 1 zeigt in einer perspektivischen Ansicht eine Explosionsdarstellung einer möglichen Ausführungsform der Arbeitsplatte mit ausfahrbarer Haltevorrichtung, wobei die Haltevorrichtungen durch einen geeigneten Halterahmen gehalten werden. Figur 2 zeigt dieselbe Ausführungsform der Arbeitsplatte als Explosionsdarstellung, wobei die Haltevorrichtungen in den Halterahmen eingebracht sind. In Figur 3 wird diese Ausführungsform zusammengesetzt unter Verwendung mit Behältern gezeigt. Figur 4 zeigt eine zweite Ausführungsform in perspektivischer Ansicht, bei der die Haltevorrichtungen direkt in die Arbeitsplatte eingebracht werden, wobei die Haltevorrichtungen eingefahren sind. Fiplatte auf Standbeinen aufsitzt und die eingefahrenen Haltevorrichtungen mittels spezieller Führungen angebracht sind. Figur 7 zeigt dieselbe Ausführungsform in perspektivischer Ansicht, wobei die Haltevorrichtungen ausgefahren sind. Figur 8 zeigt eine vierte Ausführungsform in perspektivischer Ansicht als Explosionsdarstellung, bei der die Haltevorrichtungen durch einen Halterahmen gehalten werden und der Halterahmen zusätzlich mit eingeklappten Füßen versehen ist. In Figur 9 wird selbige Ausführungsform als Explosionsdarstellung gezeigt, wobei hier die Füße ausgeklappt sind. Figur 10 zeigt diese Ausführungsform zusammengesetzt unter Benutzung mit Behältern. In Figur 11 wird eine fünfte Ausführungsform in einer perspektivischen Ansicht dargestellt, bei welcher die Haltevorrichtungen in Schubladen unter der Arbeitsplatte integriert sind.

Nachfolgend werden fünf mögliche Ausführungsformen beschrieben, die in den Figuren 1 bis 11 grafisch dargestellt werden. Hierbei sollen diese Ausführungsformen jedoch nicht einschränkend, sondern nur als Beispiele verstanden werden.

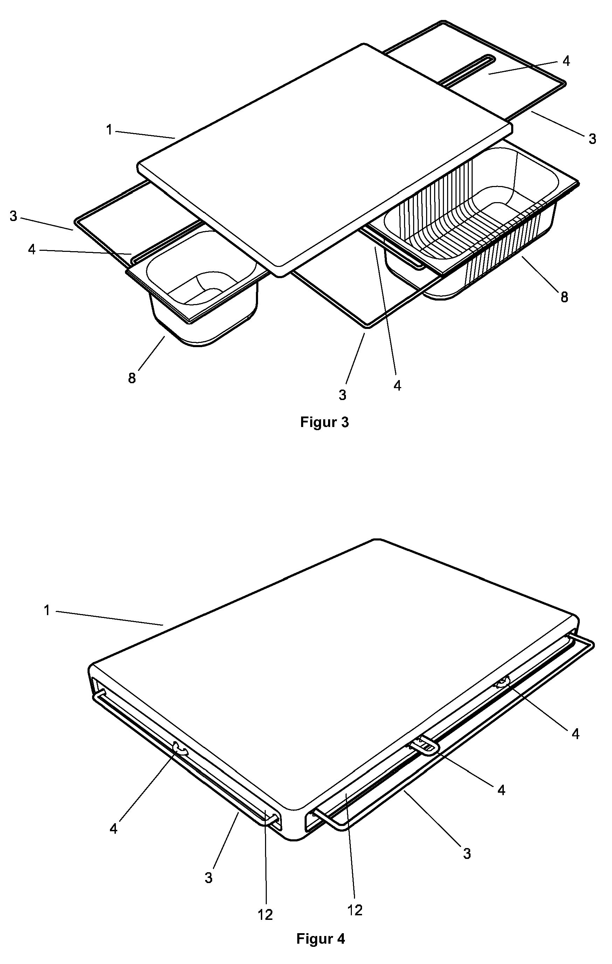

Eine erste Ausführungsform ist in Figur 1, Figur 2 und Figur 3 dargestellt. Figur 1 zeigt in Explosionsdarstellung die wesentlichen Bestandteile dieser Ausführungsform. Die Ausführungsform beinhaltet eine Arbeitsplatte (1), welche mit einem Halterahmen (5) zusammengefügt wird. Diese Verbindung kann permanent oder lösbar sein. Eine lösbare Verbindung kann beispielsweise durch Steckverbindungen und/oder Magnete hergestellt werden. Der Halterahmen (5) ist dazu geeignet, mehrere Haltevorrichtungen (3, 4) aufzunehmen. Der Halterahmen (5) besitzt für diesen Zweck spezielle Bohrungen (7). Es ist hierbei zu unterscheiden zwischen äußeren Haltevorrichtungen (3) und inneren Haltevorrichtungen (4). Umrahmt von einer äußeren Haltevorrichtung (3) können mehrere innere Haltevorrichtungen (4) angebracht werden. Wie sich in Figur 2 ersehen lässt, kann eine Haltevorrichtung entweder vollständig eingefahren sein (11), teilweise ausgefahren sein (10) oder aber vollständig ausgefahren sein (9). Figur 3 zeigt diese Ausführungsform in zusammengesetzter Form, wobei hier zwei Behälter (8) durch die Haltevorrichtungen gehalten werden. Diese Behälter können hier nur durch die Kombination von äußerer Haltevorrichtung (3) und innerer Haltevorrichtung (4) gehalten werden. Weiterhin sollen die Behälter in dieser Ausführungsform Bemessungen gemäß Gastro-Norm (Europäische Norm EN 631) besitzen. Ein besonderer Vorteil dieser Ausführungsform besteht darin, dass unterschiedliche Arbeitsplatten (1), zum Beispiel Arbeitsplatten für unterschiedliches Schnittgut, mit demselben Halterahmen (5) verwendet werden können. Auch bei Abnutzung oder Verschmutzung können die Arbeitsplatten einfach ausgetauscht werden kann, während der Halterahmen (5) weiterverwendet werden kann. Die Arbeitsplatte (1) ist solchermaßen dimensioniert, dass sie vollständig über den Halterahmen (5) hinausragt, sodass kein Spalt zwischen Arbeitsplatte und eingehängten Behältern (8) auftreten kann. Wird diese Ausführungsform auf einer Oberfläche wie einer Küchenarbeitsfläche verwendet, so sollte sie bevorzugt am seitlichen Rand oder am Eck der Oberfläche positioniert sein.

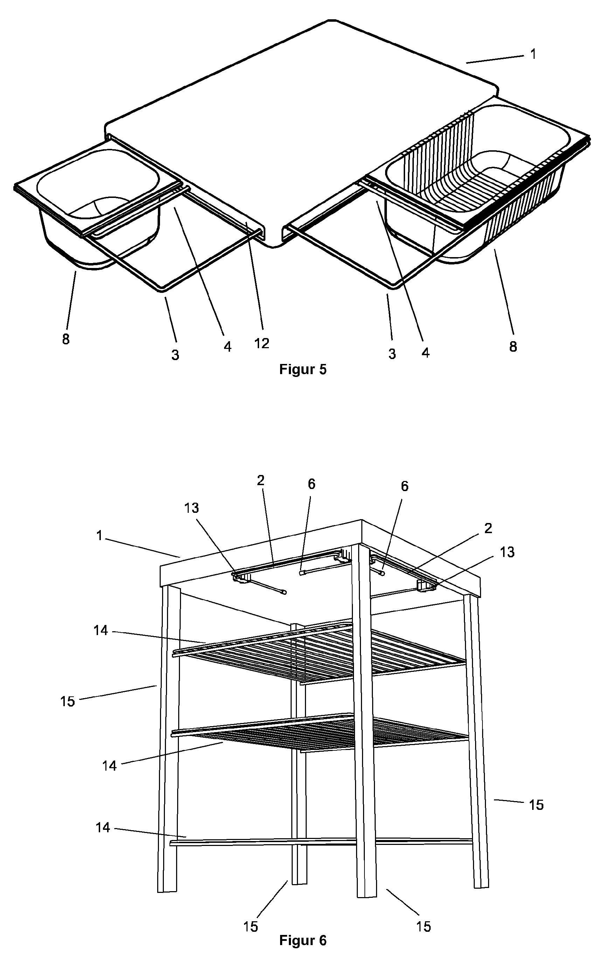

Eine zweite Ausführungsform ist in Figur 4 und Figur 5 dargestellt. Bei dieser Ausführungsform sind die Haltevorrichtungen (3, 4) direkt in der Arbeitsplatte (1) eingebracht, wozu ein System von Führungshülsen verwendet wird. Diese Führungshülsen sind fortlaufend durch die Arbeitsplatte geführt. Dies ermöglicht eine einfache Reinigung der Führungshülsen mit z.B. einem Pfeifen- oder Flaschenreiniger. Wenn diese Arbeitsplatte (1) auf einem Tisch liegt, so kann dank dieser Bauweise über Eck gearbeitet werden. Viele unterschiedliche Ausfahrkombinationen der Haltevorrichtungen (3, 4), um Behälter (8) einzuhängen, sind möglich. Auch hier sollen die Behälter (8) gemäß EN 631 ausgeführt sein. Die Platte besitzt eine Aussparung (12), sodass ein Teil des oberen Rands eingehängter Behälter (8) unter der Arbeitsfläche in der Aussparung (12) liegt. Somit ist es auch in dieser Ausführungsform gewährleistet, dass ein direktes Überführen von Arbeitsprodukten von der Platte (1) in den Behälter (8) durchgeführt werden kann, ohne dass sie in einen Spalt zwischen Platte (1) und Behälter (8) fallen können. Dadurch, dass die Haltevorrichtungen direkt in die Arbeitsplatte (1) eingebracht sind, wird hier ein ästhetisch besonders vorteilhaftes Ergebnis erzielt. Wird diese Ausführungsform auf einer Oberfläche wie einer Küchenar-(1) eingebracht sind, wird hier ein ästhetisch besonders vorteilhaftes Ergebnis erzielt. Wird diese Ausführungsform auf einer Oberfläche wie einer Küchenarbeitsfläche verwendet, so sollte sie bevorzugt am seitlichen Rand oder am Eck der Oberfläche positioniert sein.

Eine dritte Ausführungsform ist in Figuren 6 und 7 dargestellt. Bei dieser Ausführungsform wird die Arbeitsplatte (1) durch vier an den Ecken der Arbeitsplatte angebrachte Standbeine (15) gestützt. An diesen Standbeinen sind mehrere Rosthalterungen mit Rost (14) angebracht. Der herausnehmbare Rost gestattet es, zusätzliche Objekte unterhalb der Arbeitsplatte zu lagern. Der besondere Vorteil dieser Ausführungsform besteht darin, dass sich auf dem Rost zusätzlicher Stauraum ergibt. Auf dem Rost können sich Objekte auch dann befinden, wenn in die Haltevorrichtungen (2) Behälter eingehängt sind. Ein weiteres besonders Merkmal dieser Ausführungsform ist die Tatsache, dass die Haltevorrichtungen (2) mittels spezieller Bügelhalterungen (13) unterhalb der Arbeitsplatte (1) getragen werden. Diese Bügelhalterung (13) ist fest mit der Arbeitsplatte (1) verschraubt. Die Bügelhalterung (13) stellt einen ausreichenden Abstand zwischen der Unterseite der Arbeitsplatte (1) und der Haltevorrichtung (2) her. Hierdurch ist gewährleistet, dass sich ein in die Haltevorrichtung eingehängter Behälter auch teilweise unter die Arbeitsplatte (1) schieben lässt, wodurch ein Spalt zwischen Arbeitsplatte (1) und Behälter (8) vermieden werden kann. Ein Arbeiten über Eck ist auch bei dieser Ausführungsform sehr einfach möglich.

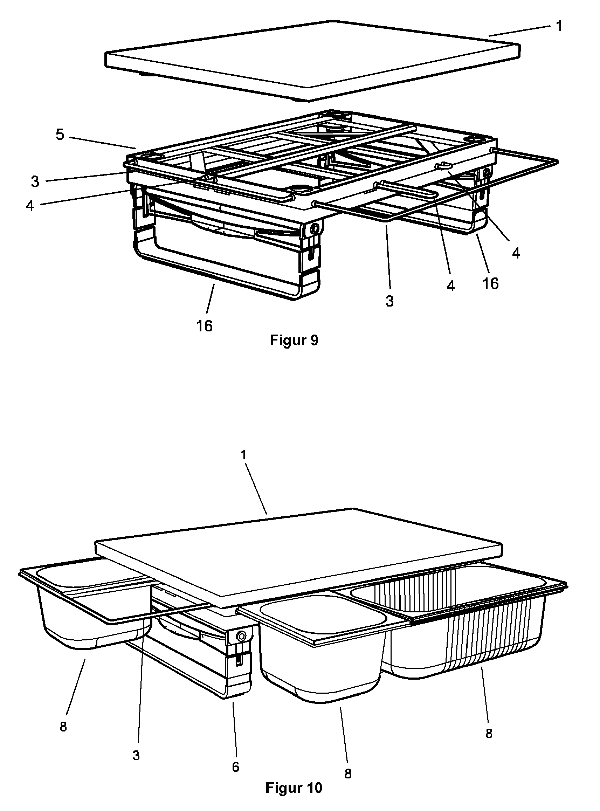

Eine vierte Ausführungsform ist in Figuren 8, 9 und 10 dargestellt. Figur 8 zeigt die Ausführungsform in einer Explosionsdarstellung, wobei ersichtlich ist, dass die Arbeitsplatte (1) mit einem Halterahmen (5) zusammengeführt wird. Der Halterahmen (5) besitzt ausklappbare Standbeine (16), welche in Figur 1 eingeklappt sind. Der Halterahmen (5) nimmt die Haltevorrichtungen (3, 4) auf. In Figur 9 ist eine Explosionsdarstellung der Ausführungsform gezeigt, wobei hier die ausklappbaren Standbeine (16) ausgeklappt sind. Figur 10 zeigt die Ausführungsform in zusammengesetzter Form unter Verwendung mit 3 Behältern (8), wobei die ausklappbaren Standbeine (16) ausgeklappt sind. Ein besonderer dere Arbeitshaltung erreichen. Ein weiterer Vorteil dieser Ausführungsform besteht darin, dass sich unter der Arbeitsplatte (1) nun noch zusätzlicher Stauraum befindet. Dank der zusätzlichen Höhe bei ausgeklappten Standbeinen (16) können Behälter (8) nun nicht nur eingehängt werden, wenn die ausgefahrenen Haltevorrichtungen (3, 4) vollständig über den Rand einer Oberfläche herausragen, auf dem die Ausführungsform steht. Dies ist ein Vorteil insbesondere gegenüber den Ausführungsformen 1 und 2. Aufgrund der zusätzlichen Höhe ist auch ein Einhängen der Behälter (8) über dem Tisch möglich. Nach der Verwendung der Vorrichtung können die ausklappbaren Standbeine eingeklappt werden, was eine platzsparende Verstauung ermöglicht.

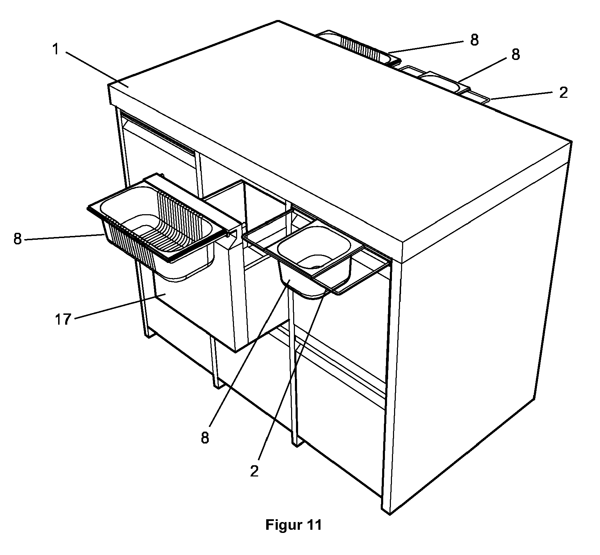

Eine fünfte Ausführungsform ist in Figur 11 dargestellt. Bei dieser Ausführungsform befinden sich unter der Arbeitsplatte (1) mehrere Schubladen (17), welche die Haltevorrichtungen (2) aufnehmen können. Diese Ausführungsform gestattet die gleichzeitige Verwendung von Schubladen (17) und Haltevorrichtungen (2). Im eingefahrenen Zustand der Schubladen (17) sind die Haltevorrichtungen bevorzugt ausgefahren. Um Zugang zum Inhalt der Schubladen zu erlangen, können die Haltevorrichtungen (2) eingefahren werden. Es ist natürlich auch möglich, wie in Figur 11 dargestellt, dass eine Schublade (17) ausgefahren ist, obwohl die zugehörige Haltevorrichtung (2) weiterhin verwendet wird, um einen Behälter (8) aufzunehmen.

### Bezugszeichenliste

1. Arbeitsplatte
2. Ausfahrbarer Bügel
3. Äußerer ausfahrbarer Bügel
4. Innerer ausfahrbarer Bügel
5. Halterahmen
6. Verbreiterung eines Bügelendes
7. Bohrung
8. Behälter
9. Bügel in vollständig ausgefahrener Position
10. Bügel in teilweise ausgefahrener Position
11. Bügel in vollständig eingefahrener Position
12.Aussparung
13. Bügelhalterung
14. Rosthalterung mit Rost
15. Standbein
16.Ausklappbares Standbein
17.Schublade

## Patentansprüche

1. Arbeitsplatte (1), **dadurch gekennzeichnet, dass** sie mindestens eine ausziehbare Haltevorrichtung aufweist, die aus einem äußeren und mindestens einem inneren ausfahrbaren u-förmigen Bügel (3, 4) besteht und wobei die Bügelenden der ausziehbaren Haltevorrichtung auf gleicher Höhe
- seitlich in die Arbeitsplatte (1) hineingeführt werden, oder
- seitlich in einen Halterahmen (5) hineingeführt werden, der fest oder abnehmbar mit der Arbeitsplatte (1) verbaut ist, oder
- seitlich in eine Schublade (17) hineingeführt werden, die ausziehbar unter der Arbeitsplatte (1) verbaut ist, oder
- durch Bügelhalterungen (13) hindurchgeführt werden, welche unterhalb der Arbeitsplatte angebracht sind.

2. Arbeitsplatte (1) nach Anspruch 1, **dadurch gekennzeichnet, dass** Arbeitsfläche und Bügelenden zueinander einen 90°-Winkel bilden, der in der Ebene der Arbeitsfläche aufgespannt wird oder der in einer Ebene aufgespannt wird, die zur Ebene der Arbeitsfläche parallel ist.

3. Arbeitsplatte (1) nach einem der vorangehenden Ansprüche, **dadurch gekennzeichnet, dass** mindestens eine ausziehbare Haltevorrichtung in vollständig oder teilweise ausgezogener Position (9, 10) eine Einhängemöglichkeit seitlich der Arbeitsplatte (1) gewährt, die einen und/oder mehrere Behälter (8) mit oben nach außen auskragendem Rand aufnehmen kann.

4. Arbeitsplatte nach einem der vorangehenden Ansprüche, **dadurch gekennzeichnet, dass** mindestens eine ausziehbare Haltevorrichtung in vollständig oder teilweise ausgezogener Position in Kombination mit mindestens einer anderen ausziehbaren Haltevorrichtung in vollständig oder teilweise ausgezogener Position eine Einhängemöglichkeit seitlich der Arbeitsplatte gewährt, die einen und/oder mehrere Behälter mit oben nach außen auskragendem Rand aufnehmen kann.

5. Arbeitsplatte (1) nach Anspruch 4, **dadurch gekennzeichnet, dass** bei jeder Einhängemöglichkeit bestehend aus mehr als einer Haltevorrichtung sich die Haltevorrichtungen auf der gleichen Höhe befinden.

6. Arbeitsplatte nach einem der Ansprüche 4 oder 5, **dadurch gekennzeichnet, dass** sich bei mindestens einer Einhängemöglichkeit bestehend aus mehr als einer Haltevorrichtung die Haltevorrichtungen unabhängig voneinander bewegen lassen.

7. Arbeitsplatte nach einem der Ansprüche 4 bis 6, **dadurch gekennzeichnet, dass** sich bei mindestens einer Einhängemöglichkeit bestehend aus mehr als einer Haltevorrichtung die Haltevorrichtungen nicht unabhängig voneinander bewegen lassen, wobei dies durch eine mechanische Verbindung zwischen den Haltevorrichtungen gewährleistet wird.

8. Arbeitsplatte nach einem der Ansprüche 3 bis 7, **dadurch gekennzeichnet, dass** die Behälter (8) solchermaßen in die Einhängemöglichkeiten eingehängt werden, dass der obere Rand der Arbeitsplatte (1) sie teilweise überdeckt, wobei dies durch
- eine Anbringung der Haltevorrichtungen in entsprechendem vertikalen Abstand zur Arbeitsplatte (1) oder
- durch eine Aussparung (12) im seitlichen Bereich der Arbeitsplatte (1) gewährleistet wird.

9. Arbeitsplatte nach einem der vorangehenden Ansprüche, **dadurch gekennzeichnet, dass** die Arbeitsplatte (1) auf mehr als einer Seite Haltevorrichtungen aufweist und dass bei allen Paaren von Haltevorrichtungen, die sich auf unterschiedlichen Seiten der Arbeitsplatte (1) befinden, die Haltevorrichtungen der betreffenden Paare in ihrer Höhe zueinander versetzt sind.

10. Arbeitsplatte nach einem der vorangehenden Ansprüche, **dadurch gekennzeichnet, dass** die maximale Ausziehlänge mindestens einer Haltevorrichtung durch bauliche Maßnahmen begrenzt ist.

11. Arbeitsplatte nach einem der vorangehenden Ansprüche, **dadurch gekennzeichnet, dass** sich bei mindestens einer Haltevorrichtung unterschiedliche Ausziehlängen durch eine Einrastfunktion festlegen lassen.

12. Verwendung einer Arbeitsplatte nach den Patentansprüchen 1 bis 11 an einem Küchenarbeitsplatz, an einem Drechslerarbeitsplatz, an einem Uhrmacherarbeitsplatz, an einem Nagelstudioarbeitsplatz, an einem Feinmechanikerarbeitsplatz oder an einem Elektronikerarbeitsplatz.

## Claims

1. Work top (1), **characterized in that** it comprises at least one extensible holding device which consists of an external bracket and at least one internal extensible U-shaped bracket (3, 4) and wherein the bracket ends of the extensible holding device are, at the same height,
- introduced laterally into the work top (1) or
- introduced laterally into a retaining frame (5), which is installed to the work top (1) in a fixed or detachable manner, or
- introduced laterally into a drawer (17), which is installed beneath the work top (1) in an extensible manner, or
- guided through bracket holders (13), which are installed beneath the work top.

2. Work top (1) according to claim 1, **characterized in that** the work top and the bracket ends together form an angle of 90°, which is spanned in the plane of the working area or which is spanned in a plane being parallel to the plane of the work top.

3. Work top (1) according to one of the preceding claims, **characterized in that** at least one extensible holding device in completely or partially extended position (9, 10) provides an insertion option laterally to the work top (1), which can receive one and/or multiple containers (8) having an edge projecting outwards.

4. Work top according to one of the preceding claims, **characterized in that** at least one extensible holding device in completely or partially extended position in combination with at least one other extensible holding devices in completely or partially extended position provides an insertion option laterally to the work top, which can receive one or multiple containers having an edge projecting outwards.

5. Work top (1) according to claim 4, **characterized in that** in each insertion option consisting of more than one holding device, the holding devices are located at the same height.

6. Work top according to one of the claims 4 or 5, **characterized in that** in at least one insertion option consisting of more than one holding device, the holding devices are moveable independently from one another.

7. Work top according to one of the claims 4 to 6, **characterized in that** in at least one insertion option consisting of more than one holding device, the holding devices are not moveable independently from one another, wherein this is ensured by means of a mechanical connection between the holding devices.

8. Work top according to one of the claims 3 to 7, **characterized in that** the containers (8) are hooked into the insertion options in such a way, that the upper edge of the work top (1) partially covers them, wherein this ensured by means of
- an attachment of the holding devices in a respective vertical distance to the work top (1), or
- by means of a recess (12) in the lateral area of the work top (1).

9. Work top according to one of the preceding claims, **characterized in that** the work top (1) comprises holding devices on more than one side and **in that** in all pairs of holding devices being located on different sides of the work top (1) the holding devices of the respective pairs are offset in height relative to one another.

10. Work top according to one of the preceding claims, **characterized in that** that the maximum extension length of at least one holding device is limited due to constructional measures.

11. Work top according to one of the preceding claims, **characterized in that** in at least one holding device different extension lengths can be set by a latch-in function.

12. Use of a work top according to of the claims 1 to 11 in a kitchen workplace, woodturning workplace, a watchmaker's workplace, a nail studio workplace, a precision mechanic's workplace or an electronic technician's workplace.

## Revendications

1. Plan de travail (1), **caractérisé en ce qu'**il comprend d'au moins un dispositif porteur extensible qui est composé d'un archet extensible extérieur en forme de U (3) et un archet intérieur en forme de U (4), et **en ce que** les extrémités d'arceau dudit dispositif porteur, en même niveau
- sont guidées, de façon latérale, dans le plan de travail (1) ou
- sont guidées, de façon latérale, dans un cadre de support (5), qui est installé avec le plan de travail (1) de manière fixe ou amovible, ou
- sont guidées, de façon latérale, dans un tiroir (17) extensible qui est installé au-dessous du plan de travail (1), ou
- sont guidées à travers des supports d'arceau (13), qui sont placés au-dessous du plan de travail.

2. Plan de travail (1), selon la revendication 1, **caractérisé en ce que** le plan de travail et les extrémités de support forment un angle de 90° l'un par rapport à l'autre, ledit angle étant formé dans le plan du plan de travail (1) ou dans un plan qui est parallèle par rapport au plan du plan de travail.

3. Plan de travail (1), selon l'une des revendication précédentes, **caractérisé en ce que** d'au moins un dispositif porteur extensible, en position entièrement ou partiellement sortie, fournit un moyen d'accrochement latéralement au plan de travail (1) qui peut accueillir un ou plusieurs récipients (8), lesdits récipients ayant un bord de façon saillante vers le haut.

4. Plan de travail selon l'une des revendications précédentes, **caractérisé en ce que** au moins un dispositif porteur extensible en position entièrement ou partiellement sortie, combiné avec d'au moins un autre dispositif porteur extensible, en position entièrement ou partiellement sortie, accorde un moyen d'accrochement latérale au plan de travail (1), capable de recevoir un ou plusieurs récipients (8) ayant un bord de façon saillante vers le haut.

5. Plan de travail (1) selon la revendication 4, **caractérisé en ce que** pour chaque moyen d'accrochement composé de plus d'un dispositif porteur, les moyens d'accrochements se trouvent au même niveau.

6. Plan de travail selon la revendication 4 ou 5, **caractérisé en ce que** concernant d'au moins un moyen d'accrochement composé de plus qu'un dispositif porteur, les dispositifs porteurs peuvent être déplacés les uns aux autres de façon indépendante.

7. Plan de travail selon l'une quelconque des revendications 4 à 6, **caractérisé en ce que** concernant d'au moins un moyen d'accrochement composé de plus qu'un dispositif porteur, les dispositifs porteurs ne peuvent pas être déplacés l'un par rapport à l'autre, de façon indépendante, cela étant permis par une liaison mécanique entre les dispositifs porteurs.

8. Plan de travail selon l'une quelconque des revendications 3 à 7, **caractérisé en ce que** les récipients (8) sont accrochés dans les moyens d'accrochement de telle manière, que le bord supérieur du plan de travail les partiellement recouvre, cela étant assuré par
- une fixation des moyens d'accrochement en distance respectivement verticale par rapport au plan de travail (1) ou
- par un évidement (12) dans la zone latérale du plan de travail (1).

9. Plan de travail selon l'une quelconque des revendications précédentes, **caractérisé en ce que** le plan de travail (1) présente des dispositifs porteurs au plus d'un côté et que pour tous les paires des dispositifs porteurs qui se trouvent aux côtés différents du plan de travail (1), les dispositifs porteurs des respectives paires sont décalés en leur hauteur l'un à l'autre.

10. Plan de travail selon l'une quelconque des revendications précédentes, **caractérisé en ce que** la longueur d'extension maximale d'au moins un dispositif porteur est limité en raison des mesures de construction.

11. Plan de travail selon l'une quelconque des revendications précédentes, **caractérisé en ce que** les longueurs d'extension d'au moins d'un dispositif porteur peuvent être déterminées au moyen d'un fonctionnement de verrouillage.

12. Utilisation d'un plan de travail selon l'une quelconque des revendications 1 à 11 dans un lieu de travail dans une cuisine, un lieu de travail à une tour, un lieu de travail d'un horloger, un studio à ongle, un lieu de travail d'un mécanicien de précision ou dans un lieu de travail d'un électricien.
